# EUROPEAN PATENT SPECIFICATION

(11) **EP 1 679 329 B1**
(45) Date of publication and mention of the grant of the patent: **19.12.2007**
(21) Application number: 06100113.7
(22) Date of filing: 05.01.2006
(51) Int. Cl.: C08G 59/40

(54) **Curable composition**
Härtbare Zusammensetzung
Composition réticulable

(30) Priority: 06.01.2005 US 641442 P
(43) Date of publication of application: 12.07.2006
(73) Proprietor: KANEKA CORPORATION, Osaka-shi, Osaka 530-8288 (JP)
(72) Inventor: Ando, Katsuhiro, Hyogo 674-0067 (JP); Chiba, Yasuo, Fujimi-shi Saitama 354-0018 (JP); Morimoto, Hiroya, Bunkyo-ku Tokyo 113-0021 (JP); Yokomakura, Masahiro, Nagareyama-shi Chiba 270-0135 (JP)
(74) Representative: Hart Davis, Jason

(56) References cited:
- EP-A- 0 890 594
- PATENT ABSTRACTS OF JAPAN vol. 1999, no. 13, 30 November 1999 (1999-11-30) & JP 11 217488 A (YOKOHAMA RUBBER CO LTD:THE), 10 August 1999 (1999-08-10)

## Description

### TECHNICAL FIELD

The present invention relates to a one-component type room temperature-curable composition which is useful for coating materials, adhesives, sealers, casting materials, potting materials, sealing materials and the like used in various fields.

### BACKGROUND ART

An epoxy resin is widely applied to various industrial fields of coating materials, adhesives, sealers, casting materials, potting materials, sealing materials and the like. However, since the epoxy resin has low impact resistance due to the brittleness of the cured product therefrom, it has a drawback that an interfacial failure tends to occur when it is used for an adhesive and the like.

On the other hand, a polyoxyalkylene polymer having a reactive silicon group is used as an architectural adhesive and/or sealing material since it is cured at room temperature to become a rubber-like elastic body and it has good adhesion to various base materials. However, the polyoxyalkylene polymer has a drawback that the strength of the cured product therefrom is low.

To this end, for the purpose of supplementing the brittleness of the cured epoxy resin and the insufficient strength of the polyoxyalkylene polymer containing a reactive silicon group, there is proposed a composition in which an epoxy resin is combined with a polyoxyalkylene polymer containing a reactive silicon group (see, for example, Japanese Kokai Publication Sho-61-247723 and Japanese Kokai Publication Sho-61-268720). The forms of these compounds are divided into a two-component type which consists of a base material and a curing agent and a one-component type in which a latent type ketimine is used as a curing agent for an epoxy resin (see, for example, Japanese Kokai Publication Sho-63-273629, Japanese Kokai Publication Hei-04-1220, Japanese Kokai Publication Hei-05-271389).

Since the one-component type can be easily handled by a non-skilled worker, its market needs is large. However, it is insufficient in adhesion strength, water resistance and the like since the storage stability of the epoxy resin and the ketimine is poor and therefore the epoxy resin and the ketimine can be added to the composition in only small amount.

In order to improve the storage stability of a curable composition comprising an epoxy resin and a ketimine, there is proposed to use a ketimine, which is obtained from any one of aliphatic diamines, aliphatic polyamines and alicyclic diamines, and ketones, as a curing agent for an epoxy resin (see, for example, Japanese Kokai Publication Hei-08-217858). However, since the ketimine obtained by this method is oligomer, it has high viscosity and a mixture of this ketimine and epoxide has insufficient processability.

In addition, there is also proposed a composition comprising an epoxy resin and a ketimine obtained from a polyoxyalkylene polyamine which has a methyl group at its α position (see, for example, Japanese Kokai Publication Hei-10-60095). In this method, it is possible to prepare a composition having a long pot life; however, there is a problem that since its raw material polyoxyalkylene polyamine essentially has a slow curing rate, it application is limited in a practical use.

Further, there is also proposed a composition comprising a polyepoxide, and a ketimine comprising a condensate of a ketone having a substituent at its α position and a polyamine having a primary amino group coupled to a secondary carbon atom (see, for example, Japanese Kokai Publication 2000-178343). Its raw material polyamine has one or two alkyl group(s) at its α position. All polyamines having such alkyl groups substantially exhibit extremely slow reaction with respect to the epoxide, and therefore can achieve the control of a pot life length. However, such polyamines may require heating or a longer curing time at room temperature in curing after the pot life, and it is inadequate for practical use.

In addition, there is also proposed a composition comprising an epoxy resin and a ketimine obtained from a condensate of a ketone which has a substituent at its α position and an amine as another component (see, for example, Japanese Kokai Publication 2000-30927). However, the ketone having a substituent at its α position, which is used in this method, is a particular chemical material and therefore there is a problem from the economic viewpoint.

### SUMMARY OF THE INVENTION

It is an object of the present invention to provide a one-component type room temperature-curable composition having good storage stability, which comprises an epoxy resin and an organic polymer containing a reactive silicon group.

In order to achieve the above object, the present inventors made intensive investigations and consequently found that it is effective to use a curable composition comprising a polyepoxide having two or more oxirane rings in a molecule or a polyepoxide formed optionally by mixing, into the above-mentioned polyepoxide, monoepoxide having one oxirane ring per a molecule, a certain ketimine, and an organic polymer containing a reactive silicon group. These findings have now led to completion of the present invention.

That is, the present invention provides
a curable composition
which comprises, as a constituent,:
(A) a polyepoxide having two or more oxirane rings in a molecule or a polyepoxide formed optionally by mixing, into the above-mentioned polyepoxide, monoepoxide having one oxirane ring per a molecule;
(B) a ketimine derived from an amine represented by the following general formula: 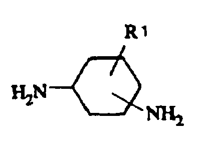 or 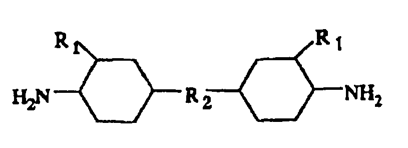 (wherein R₁ represents a hydrogen atom, a methyl group or an ethyl group, and R₂ represents -CH₂-, -O- or -SO₂- group), or 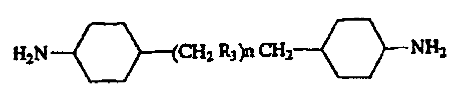 (wherein R₃ represents 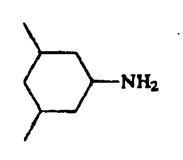 or 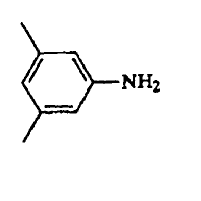 and n represents an integer of 1 to 4) and an aliphatic ketone, as a curing agent; and
(C) an organic polymer containing a reactive silicon group represented by the following general formula (1):

-Si(R¹₃₋ₐ)Xₐ (1)

(wherein R₁ represents a substituted or unsubstituted organic group, X represents a hydroxyl group or a hydrolyzable group and a represents an integer of 1, 2 or 3).

Preferred is the curable composition wherein the ketimine as the component (B) is a condensate of an amine selected from 1,2-diaminocyclohexane, 1,3-diaminocyclohexane, 1,4-diaminocyclohexane, 1,2-diamino-4-methylcyclohexane, 1,3-diamino-5-methylcyclohexane, 1,4-diamino-2-methylcyclohexane, 1,2-diamino-4-ethylcyclohexane, 1,3-diamino-5-ethylcyclohexane, 1,4-diamino-2-ethylcyclohexane, bis(4-aminocyclohexyl)methane, bis(3-methyl-4-aminocyclohexyl)methane, bis(3-ethyl-4-aminocyclohexyl)methane, bis(4-aminocyclohexyl)sulfone, bis(3-methyl-4-aminocyclohexyl)sulfone, bis(3-ethyl-4-aminocyclohexyl)sulfone, bis(4-aminocyclohexyl)ether, bis(3-methyl-4-aminocyclohexyl)ether, bis (3-ethyl-4-aminocyclohexyl) ether, and a polyamine obtained by hydrogenating an oligocondensate of aniline and formaldehyde, and an aliphatic ketone.

More preferred is the curable composition wherein the ketimine as the component (B) is a condensate of an aliphatic ketone selected from 2-propanone, 2-butanone, 3-methyl-2-butanone, 3,3-dimethyl-2-butanone, 2-pentanone, 3-pentanone, 2-methyl-3-pentanone, 3-methyl-2-pentanone, 4-methyl-2-pentanone, 4-methyl-3-pentanone, 2,4-dimethyl-3-pentanone, 2-hexanone, 3-hexanone, 5-methyl-2-hexanone, 2-heptanone, 3-heptanone, 4-heptanone, 2-octanone and 3-octanone, and an amine having two or more primary amino groups coupled directly to a cyclohexane ring.

More preferred is the curable composition wherein the ketimine as the component (B) is a condensate of an amine selected from 1,2-diaminocyclohexane, 1,3-diaminocyclohexane, 1,4-diaminocyclohexane, bis(4-aminocyclohexyl)methane, bis(3-methyl-4-aminocyclohexyl)methane, and a polyamine obtained by hydrogenating an oligocondensate of aniline and formaldehyde, and an aliphatic ketone.

More preferred is the curable composition wherein the ketimine as the component (B) is a condensate of an aliphatic ketone selected from 2-butanone, 3,3-dimethyl-2-butanone, 2-pentanone, 3-pentanone, 2-methyl-3-pentanone, 4-methyl-2-pentanone, 2,4-dimethyl-3-pentanone and 5-methyl-2-hexanone, and an amine having two or more primary amino groups coupled directly to a cyclohexane ring.

More preferred is the curable composition wherein the ketimine as the component (B) is a condensate of 4-methyl-2-pentanone and an amine having two or more primary amino groups coupled directly to a cyclohexane ring.

In addition, preferred is the curable composition wherein the polyepoxide as the component (A) is a polyepoxide selected from a glycidyl ether type polyepoxide, a glycidyl ether ester type polyepoxide, a glycidyl ester type polyepoxide, a glycidyl amine type polyepoxide, a glycidyl aminoglycidyl ether type polyepoxide, a glycidyl aminoglycidyl ester type polyepoxide, a polyglycidyl amine type polyepoxide, and an epoxidized polyolefin type polyepoxide.

More preferred is the curable composition wherein the glycidyl ether type polyepoxide is any one selected from:
a glycidyl ether obtained by reacting a phenolic compound selected from bisphenol A, bisphenol F, bisphenol S, tetrabromobisphenol A, bisphenol hexafluoroacetone, tetramethylbisphenol A, tetramethylbisphenol F, tetrahydrobisphenol F, hexahydrobisphenol A, hydrogenated bisphenol A and hydrogenated bisphenol F with epichlorohydrin;
a glycidyl ether obtained by reacting a novolac compound selected from phenol novolac, cresol novolac, ethylphenol novolac, propylphenol novolac, butylphenol novolac, pentylphenol novolac, octylphenol novolac and nonylphenol novolac with epichlorohydrin;
a glycidyl ether obtained by reacting a polyhydric phenol selected from catechol, resorcin, trihydroxybiphenyl, dihydroxybenzophenone, bisresorcinol, hydroquinone, tris(hydroxyphenyl)methane, tetrakis(hydroxyphenyl)ethane and bixylenol with epichlorohydrin; and
a polyglycidyl ether obtained by reacting an aliphatic polyhydric alcohol selected from glycerol, neopentyl glycol, ethylene glycol, propylene glycol, tetramethylene glycol, hexylene glycol, polyethylene glycol and polypropylene glycol with epichlorohydrin.

More preferred is the curable composition wherein the glycidyl ether type polyepoxide is any one of:
a polyglycidyl ether obtained by reacting a polyhydric hydroxy compound selected from bisphenol A, bisphenol F, phenol novolac, cresol novolac, octylphenol novolac and nonylphenol novolac with epichlorohydrin; or
a polyglycidyl ether obtained by reacting an aliphatic polyhydric alcohol selected from ethylene glycol, propylene glycol, tetramethylene glycol, hexylene glycol, polyethylene glycol and polypropylene glycol with epichlorohydrin.

In addition, preferred is the curable composition wherein the glycidyl ether ester type polyepoxide is a glycidyl ether ester obtained by reacting a hydroxycarboxylic acid which is p-oxybenzoic acid or β-oxynaphthoic acid with epichlorohydrin.

In addition, preferred is the curable composition wherein the glycidyl ester type polyepoxide is a polyglycidyl ester obtained by reacting a polycarboxylic acid selected from phthalic acid, methylphthalic acid, isophthalic acid, terephthalic acid, tetrahydrophthalic acid, hexahydrophthalic acid, endomethylene tetrahydrophthalic acid, endomethylene hexahydrophthalic acid, trimellitic acid, dimmer acid and polymerized fatty acid with epichlorohydrin.

In addition, preferred is the curable composition wherein the glycidyl aminoglycidyl ether type polyepoxide is a glycidyl aminoglycidyl ether obtained by reacting aminophenol or aminoalkylphenol with epichlorohydrin.

In addition, preferred is the curable composition wherein the glycidyl aminoglycidyl ester type polyepoxide is a diglycidyl amino ester obtained by reacting aminobenzoic acid with epichlorohydrin.

In addition, preferred is the curable composition wherein the polyglycidyl amine type polyepoxide is a polyglycidyl amine obtained by reacting any one amino compound selected from aniline, toluidine, 2,4,6-tribromoaniline, m-xylylenediamine, 1,2-diaminocyclohexane, 1,3-diaminocyclohexane, 1,4-diaminocyclohexane, 4,4-diaminodiphenyl ether, 4,4-diaminodiphenylmethane, 4,4-diaminodiphenylsulfone, hydantoin, alkylhydantoin and cyanuric acid with epichlorohydrin.

In addition, preferred is the curable composition wherein the epoxidized polyolefin type polyepoxide is an epoxidized polyolefin obtained by epoxidizing alicyclic polyolefin or aliphatic polyolefin.

In addition, the skeleton of the main chain of the component (C) is preferably a polyoxyalkylene polymer, and more preferably a polyoxypropylene polymer.

### DETAILED DESCRIPTION OF THE INVENTION

Hereinafter, the present invention will be described in detail.

As the epoxy resin as the component (A) of the present invention, any epoxy resin exhibiting reactivity with respect to an amine can be used.

The epoxy resin which can be used in the present invention is not particularly restricted and well-known epoxy resins can be used. Specific examples thereof include:
glycidyl ethers obtained by reacting bisphenolic compounds such as bisphenol A, bisphenol F, bisphenol S, tetrabromobisphenol A, bisphenol hexafluoroacetone, tetramethylbisphenol A, tetramethylbisphenol F, tetrahydrobisphenol F, hexahydrobisphenol A, hydrogenated bisphenol A or hydrogenated bisphenol F with epichlorohydrin;
glycidyl ethers obtained by reacting novolacs such as phenol novolac, cresol novolac, ethylphenol novolac, propylphenol novolac, butylphenol novolac, pentylphenol novolac, octylphenol novolac or nonylphenol novolac with epichlorohydrin;
glycidyl ethers obtained by reacting polyhydric phenols such as catechol, resorcin, trihydroxybiphenyl, dihydroxybenzophenone, bisresorcinol, hydroquinone, tris(hydroxyphenyl)methane, tetrakis (hydroxyphenyl) ethane or bixylenol with epichlorohydrin;
polyglycidyl ethers obtained by reacting aliphatic polyhydric alcohols such as glycerol, neopentyl alcohol, ethylene glycol, propylene glycol, tetramethylene glycol, hexylene glycol, polyethylene glycol or polypropylene glycol with epichlorohydrin;
glycidyl ether esters obtained by reacting hydroxycarboxylic acids such as p-oxybenzoic acid or β-oxynaphthoic acid with epichlorohydrin;
polyglycidyl esters obtained by reacting polycarboxylic acids such as phthalic acid, methylphthalic acid, isophthalic acid, terephthalic acid, tetrahydrophthalic acid, hexahydrophthalic acid, endomethylene tetrahydrophthalic acid, endomethylene hexahydrophthalic acid, trimellitic acid, dimmer acid or polymerized fatty acid with epichlorohydrin;
glycidyl aminoglycidyl ethers obtained by reacting aminophenol or aminoalkylphenol with epichlorohydrin;
diglycidyl amino esters obtained by reacting aminobenzoic acid with epichlorohydrin;
polyglycidyl amines obtained by reacting aniline, toluidine, 2,4,6-tribromoaniline, m-xylylenediamine, 1,2-diaminocyclohexane, 1,3-diaminocyclohexane, 1,4-diaminocyclohexane, 4,4-diaminodiphenyl ether, 4,4-diaminodiphenylmethane, 4,4-diaminodiphenylsulfone, hydantoin, alkylhydantoin or cyanuric acid with epichlorohydrin;
epoxidized polyolefins obtained by epoxidizing an alicyclic polyolefin or an aliphatic polyolefin;
and the like.

The polyepoxide compound which is preferable for use in the present invention is diglycidyl ether of bisphenol A and bisphenol F.

A polyepoxide compound having two or more oxirane rings in a molecule, if required, may be used as a mixture of two or more species of such polyepoxide compounds.

Furthermore, these polyepoxide compounds having two or more oxirane rings in a molecule may be arbitrarily mixed with a monoepoxide compound having one oxirane ring in a molecule to be used. Specific examples of the monoepoxide compound include butyl glycidyl ether, phenyl glycidyl ether, alkyl phenyl glycidyl ether, benzoic acid glycidyl ester, styrene oxide, and the like.

The ketimine as the component (B) of the present invention can be obtained by a condensation reaction of:
(1) an amine having two or more primary amino groups coupled directly to a cyclohexane ring and having the following general formula: 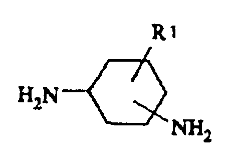 or 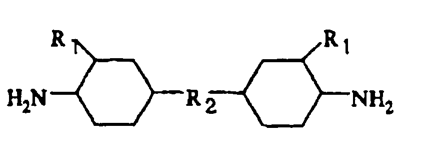 (wherein R₁ represents a hydrogen atom, a methyl group or an ethyl group, and R₂ represents -CH₂-, -O- or -SO₂- group), or 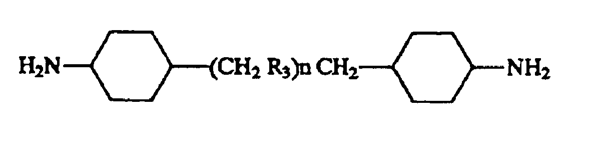 (wherein R₃ represents 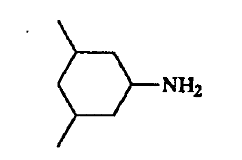 or 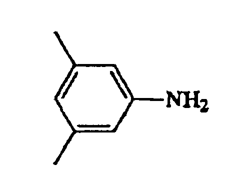 and n represents an integer of 1 to 4); and
(2) an aliphatic ketone.

Specific examples of the amine include 1,2-diaminocyclohexane, 1,3-diaminocyclohexane, 1,4-diaminocyclohexane, 1,2-diamino-4-methylcyclohexane, 1,3-diamino-5-methylcyclohexane, 1,4-diamino-2-methylcyclohexane, 1,2-diamino-4-ethylcyclohexane, 1,3-diamino-5-ethylcyclohexane, 1,4-diamino-2-ethylcyclohexane, bis(4-aminocyclohexyl)methane, bis(3-methyl-4-aminocyclohexyl)methane, bis(3-ethyl-4-aminocyclohexyl)methane, bis(4-aminocyclohexyl)sulfone, bis(3-methyl-4-aminocyclohexyl)sulfone, bis(3-ethyl-4-aminocyclohexyl)sulfone, bis(4-aminocyclohexyl)ether, bis(3-methyl-4-aminocyclohexyl)ether, bis(3-ethyl-4-aminocyclohexyl)ether, a polyamine obtained by hydrogenating an oligocondensate of aniline and formaldehyde, and the like.

Among these amines, more preferable amine in production of the ketimine of the present invention is bis(4-aminocyclohexyl)methane (PACM).

Specific examples of the ketone which can be used as a starting material of the ketimine of the present invention include 2-propanone (acetone), 2-butanone, 3-methyl-2-butanone, 3,3-dimethyl-2-butanone, 2-pentanone, 3-pentanone, 2-methyl-3-pentanone, 3-methyl-2-pentanone, 4-methyl-2-pentanone, 4-methyl-3-pentanone, 2,4-dimethyl-3-pentanone, 2-hexanone, 3-hexanone, 5-methyl-2-hexanone, 2-heptanone, 3-heptanone, 4-heptanone, 2-octanone, 3-octanone, and the like.

More preferable ketone in production of the ketimine of the present invention is 4-methyl-2-pentanone.

The ratio of the amount of the component (A) and the amount of the component (B), used in the present invention, is equal to a ratio of an epoxy resin component and an amine component in a usual epoxy resin composition. The equivalent weight of active hydrogen of an amine derived from a ketimine group in the component (B) is preferably 0.3 to 1.8 equivalent, more preferably 0.5 to 1.2 equivalent relative to the epoxy group in the component (A).

The component (B) can be obtained by reacting the above-mentioned amine with the above-mentioned ketone under the general conditions. More specifically, the ketimine can be produced by condensing the amine and the ketone under heating, in the presence of an inert organic solvent if necessary, and in the presence of a dehydrating agent if furthermore necessary, or by use of azeotropic distillation, and it can be obtained by using 1 or more equivalent(s), preferably 1 to 5 equivalent (s) of the ketone to the amine and then removing the ketone and optionally an excessive amount of the solvent through azeotropic distillation and with a dehydrating agent.

A curing catalyst or a curing accelerator may be added to the composition of the present invention in order to accelerate a reaction of the epoxy compound and the ketimine. Specific examples of such a curing catalyst or a curing accelerator include: monoalkylphenols such as phenol, cresol, ethylphenol, propylphenol, butylphenol, octylphenol and nonylphenol; dialkylphenols such dimethylphenol, diethylphenol, dipropylphenol, dibutylphenol, dipentylphenol and dihexylphenol; diphenols such as bisphenol A and bisphenol F; dimethylaminomethylphenol; tris(dimethylaminomethyl)phenol; salicylic acid; p-toluenesulfonic acid; phosphoric acid and derivatives thereof; metal salts of carboxylic acids such as dialkyltin laurate, dialkyltin maleate and dialkyltin benzoate; and the like.

In the composition of the present invention, a compound formed by converting an amine other than the above-mentioned amines to a ketimine compound may be used in combination in addition to the ketimine of the component (B) obtained from the above-mentioned amine in accordance with the objective. Specific examples of the amine include propylamine, butylamine, pentylamine, hexylamine, octylamine, laurylamine, captylamine, myristylamine, stearylamine, ethylenediamine, diethylenetriamine, triethylentetramine, tetraethylenepentamine, pentaethylenehexamine, propylenediamine, dipropylenetriamine, diaminobutane, diaminopentane, hexamethylenediamine, diaminodecane, diaminododecane, trimethylhexamethylenediamine, methylpentamethylenediamine, piperazine, aminoethylpiperazine, dimethylaminopropylamine, diethylaminopropylamine, dipropylaminopropylamine, dibutylaminopropylamine, dimethylaminoethylamine, diethylaminoethylamine, dipropylaminoethylamine, dibutylaminoethylamine, cyclohexylamine, alkyl cyclohexylamine, benzylamine, diaminocyclohexane, xylylenediamine, 1,3-bis(aminomethyl)cyclohexane, isophorone diamine, tricyclodecane diamine, benzylpropylenediamine, bis(aminomethyl)bicycle[2.2.1]heptane, 5,5'-methylenebis-2-furanomethanediamine, diamine containing a spiroacetal ring, menthanediamine, bis(3-methyl-4-aminocyclohexyl)methane, aniline, alkylaniline, phenylenediamine, diethyltoluenediamine, diaminodiphenylmethane, diaminodiphenyl ether, diaminodiphenyl sulfone, 1,1'-bis[4-(p-aminophenoxy)phenyl]-cyclohexane, benzene-formaldehyde oligomer, and the like.

Furthermore, examples thereof may include mono- or polyepoxide adducts of the above-mentioned amines, amide compounds with fatty acids, condensation products of phenols or alkylphenols and formaldehyde, adducts of acrylic acids or acrylonitrile, condensation products of ketones, and the like.

An example of the reactive silicon group of the organic polymer having a reactive silicon group as the component (C) of the present invention is a group represented by the following general formula (1):

-Si(R¹₃₋ₐ)Xₐ (1)

(wherein R₁ represents a substituted or unsubstituted organic group, X represents a hydroxyl group or a hydrolyzable group and a represents an integer of 1, 2 or 3).

Examples of X in the general formula (1) include a hydrogen atom, a halogen atom, an alkoxy group, an acyloxy group, a ketoximate group, an amino group, an amide group, an acid amide group, an aminoxy group, a mercapto group, an alkenyloxy group, and the like. Among them, an alkoxy group is preferred because it has a mild hydrolyzable property and is easy to handle. Particularly preferred are alkoxy groups such as a methoxy group, an ethoxy group, a propoxy group and an isopropoxy group.

Specific examples of R₁ in the general formula (1) include: alkyl groups such as a methyl group and an ethyl group; cycloalkyl groups such as a cyclohexyl group; aryl groups such as a phenyl group; aralkyl groups such as a benzyl group; and the like. As R₁, a methyl group is particularly preferred.

The skeleton of the main chain of the component (C) organic polymer is not particularly restricted; however, polyoxyalkylene is particularly preferred from the viewpoint of providing flexibility for the resulting cured product, and further polyoxypropylene is more preferred from the viewpoint of adhesion and the like.

The molecular weight of the component (C) is preferably 2,000 to 100,000, more preferably 3,000 to 70,000 from the viewpoint of handling.

The amount of the component (C) to be used is in a range that a weight ratio of the component (C) to the component (A) is 100/1 to 1/100. When the ratio of the component (C) to the component (A) is less than 1/100, it becomes difficult to attain an effect of improving the impact strength and the toughness of the cured epoxy resin. When this ratio of the component (C) to the component (A) exceeds 100/1, the strength of the resulting cured product containing the component (C) becomes insufficient. The preferable ratio of the component (C) to the component (A) cannot be generally determined since it varies according to the application of the curable composition. However, for example, in the case of improving the impact resistance, flexibility, toughness and peel strength of the cured epoxy resin, it is advisable to use 1 to 100 parts by weight, more preferably 5 to 100 parts by weight of the component (C) with respect to 100 parts by weight of the component (A). On the other hand, in the case of improving the strength of the cured product of the component (C), it is advisable to use 1 to 200 parts by weight, more preferably 5 to 100 parts by weight, particularly preferably 5 to 50 parts by weight of the component (A) with respect to 100 parts by weight of the component (C).

An specific example of the component (C) is polyether having hydrolysable silicon, for example, product names: "MS Polymer S203", "MS Polymer S303", "Silyl SAT200", "Silyl SAT350", "Silyl SAT400", "Silyl EST280" (each produced by Kaneka Corporation), and the like. These may be used singly or in combination of two or more species.

In some cases, by modifying the above-mentioned main chain component with acrylic substances, adhesion and weather resistance can be improved. Specific examples thereof include "Silyl MA440", "Silyl MA903", "Silyl MA904" (each produced by Kaneka Corporation), and the like.

In addition, as the component (C), polyether having hydrolysable silicon and containing an urethane bond or a urea bond can be used. To the curable composition of the present invention, a curing catalyst and a silane coupling agent, which accelerate curing of the component (C), a filler, a plasticizer, an antioxidant, an ultraviolet absorber, an optical stabilizer, a coloring agent, and the like may be added according to need.

As the curing catalyst which accelerates curing of the component (C), well-known catalysts, which are used for condensing silanol of an organic polymer containing a reactive silicon group, can be widely employed. Specific examples thereof include: organic tin compounds such as dibutyltin dilaurate, bis(dibutyltin laurate)oxide, dibutyltin maleate, dibutyltin diacetate, tin 2-ethylhexanoate, tin naphthenate, tin versatate, a reaction product of dibutyltin oxide and phthalate esters, a reaction product of dibutyltin oxide and maleate esters, a reaction product of dibutyltin oxide and ethyl silicate, and dibutyltin bisacetylacetonate; titanate esters such as tetrabutyl titanate and tetraisopropyl titanate; organic aluminum compounds such as aluminum trisacetylacetonate, aluminum trisethylacetoacetate and diisopropoxyaluminum ethylacetoacetate; chelate compounds such as zirconium tetraacetylacetonate and titanium tetraacetylacetonate; bismuth tris(2-ethylhexanoate); silanol condensation catalysts such as zinc octylate and further well-known silanol condensation catalysts such as another acid catalyst or basic catalyst; and the like.

These catalysts may be used singly or in combination of two or more species. Among these condensation catalysts, organic tin compounds are preferred from the viewpoint of curability, storage stability and balance of properties.

As the silane coupling agent, a variety of well-known agents can be employed. Example thereof include: amino group-containing silanes such as γ-aminopropyltrimethoxysilane, γ-aminopropylmethyldimethoxysilane, N-(β-aminoethyl)-γ-aminopropyltrimethoxysilane, N-(β-aminoethyl)-γ-aminopropylmethyldimethoxysilane, N-(β-aminoethyl)-γ-aminopropyltriethoxysilane, γ-ureidopropyltriethoxysilane, N-(β-N-vinylbenzylaminoethyl)-γ-aminopropyltrimethoxysilane andy-anilinopropyltrimethoxysilane; mecapto group-containing silanes such as γ-mecaptopropyltrimethoxysilane, γ-mecaptopropyltriethoxysilane, γ-mecaptopropylmethyldimethoxysilane and γ-mecaptopropylmethyldiethoxysilane; epoxy group-containing silanes such as γ-glycidoxypropyltrimethoxysilane, γ-glycidoxypropylmethyldimethoxysilane, γ-glycidoxypropyltriethoxysilane and β-(3,4-epoxycyclohexyl)ethyltrimethoxysilane; carboxy silanes such as β-carboxylethylphenylbis(β-methoxyethoxy)silane and N-(β-N-carboxylmethylaminoethyl)-γ-aminopropyltrimethoxysilane; silanes converted to a ketimine compound, which is obtained by dehydrocondensation of amino group-containing silanes and various ketones; a reaction product of amino group-containing silanes and epoxy group-containing silanes; a reaction product of mercapto group-containing silanes and epoxy group-containing silanes; a reaction product of amino group-containing silanes and an epoxy resin; a reaction product of mercapto group-containing silanes and an epoxy resin; ethyl silicates such as tetraethoxysilane, tetramer of tetraethoxysilane and hexamer of tetraethoxysilane; vinyl silanes such as vinyltrimethoxysilane, vinyltriethoxysilane and vinyltriacetoxysilane; methacryloxy silanes such as 3-methacryloxy propyl trimethoxysilane and 3-methacryloxy propyl triethoxysilane; and the like. These silane coupling agents may be used singly or in combination of two or more species.

Specific examples of the filler include ground calcium carbonate, light calcium carbonate, colloidal calcium carbonate, magnesium carbonate, clay, kaoline, talc, mica, silica (fumed silica, precipitated silica, crystalline silica, fused silica, dolomite, silicic anhydride, and hydrous silicic acid, and the like), titanium oxide, diatomaceous earth, and the like. These inorganic fillers may be used singly or may be used in combination of two or more species. Particularly, it is more preferred to use ground calcium carbonate and colloidal calcium carbonate from the viewpoint of workability, cost and balance of properties.

Applications, to which the curable composition of the present invention is applied, are not particularly restricted and the present invention can be applied to wide applications of building, civil works, industries, electronic materials, medical materials and the like.

The storage stability is improved without deteriorating various physical properties of a one-component room temperature-curable composition which comprises an epoxy resin and a polyoxyalkylene polymer containing a reactive silicon group.

### BEST MODE FOR CARRYING OUT THE INVENTION

Hereinafter, the present invention will be described by way of specific examples so as to be more evident; however, the present invention is not limited to these examples.

### (Production of a ketimine)

A method of producing a ketimine used in Examples 1 to 3 and Comparative Examples 1 and 2 is shown below.

### (Production Example 1)

### A ketimine (ketimine A) produced from 1,2-diaminocyclohexane (DACH) and 4-methyl-2-pentanone (MIBK)

Into a 500-g flask equipped with a magnetic stirrer, a thermometer, a nitrogen injection unit, and a Dean-Stark device were charged 57 g (0.5 mol) of 1,2-diaminocyclohexane and 250 g (2.5 mol) of 4-methyl-2-pentanone. A temperature of this mixture was gradually increased to 160°C by heating using a mantle heater while refluxing 4-methyl-2-pentanone. During this procedure, water removed by distillation was collected in another container. After an amount of the collected water reached about 18 g, the temperature was further increased to 180°C and maintained for 2 hours at this temperature, and remaining 4-methyl-2-pentanone was removed. After the mixture was cooled, 135 g of desired ketimine A was taken out as a residual in the flask. The viscosity of this product was 9.7 mPa·s at 25°C, and calculated equivalent weight of active hydrogen was 67.

### (Production Example 2)

### A ketimine (ketimine B) produced from bis(4-aminocyclohexyl)methane (PACM) and 4-methyl-2-pentanone

183 g of ketimine B was obtained by following the same procedure as in Production Example 1 except for charging 105 g (0.5 mol) of bis (4-aminocyclohexyl) methane and 250 g (2.5 mol) of 4-methyl-2-pentanone into a flask similar to Production Example 1. The viscosity of this product was 180 mPa·s at 25°C, and calculated equivalent weight of active hydrogen was 92.

### (Production Example 3)

### A ketimine (ketimine C) produced from a polyfunctional polyamine (MPCA) and 4-methyl-2-pentanone

180 g of ketimine C was obtained by following the same procedure as in Production Example 1 except for charging 105 g of MPCA (ANCAMINE 2167; produced by Air Products Japan, Inc. (a polyfunctional polyamine produced by hydrogenating an oligomer obtained by condensation of aniline and formaldehyde)) and 250 g (2.5 mol) of 4-methyl-2-pentanone into a flask similar to Production Example 1. The viscosity of this product was 200 mPa·s at 25°C, and calculated equivalent weight of active hydrogen was 90.

### (Production Example 4)

### A ketimine (ketimine D) produced from norbornane diamine (NBDA) and 4-methyl-2-pentanone

155 g of ketimine D was obtained by following the same procedure as in Production Example 1 except for charging 77 g (0.5 mol) of norbornane diamine and 250 g (2.5 mol) of 4-methyl-2-pentanone into a flask similar to Production Example 1. The viscosity of this product was 20 mPa·s at 25°C, and calculated equivalent weight of active hydrogen was 80.

### (Production Example 5)

### A ketimine (ketimine E) produced from metaxylylenediamine (MXDA) and 4-methyl-2-pentanone

145 g of ketimine E was obtained by following the same procedure as in Production Example 1 except for charging 68 g (0.5 mol) of metaxylylenediamine and 250 g (2.5 mol) of 4-methyl-2-pentanone into a flask similar to Production Example 1. The viscosity of this product was 8.3 mPa·s at 25°C, and calculated equivalent weight of active hydrogen was 75.

### (Examples 1 to 3, Comparative Examples 1 and 2)

One-component type curable compositions were prepared in the composition shown in Table 1. Storage stability was evaluated by measuring (measuring temperature: 23°C) the viscosity before and after storage (storing at 50°C for 2 weeks) using a BS type viscometer.

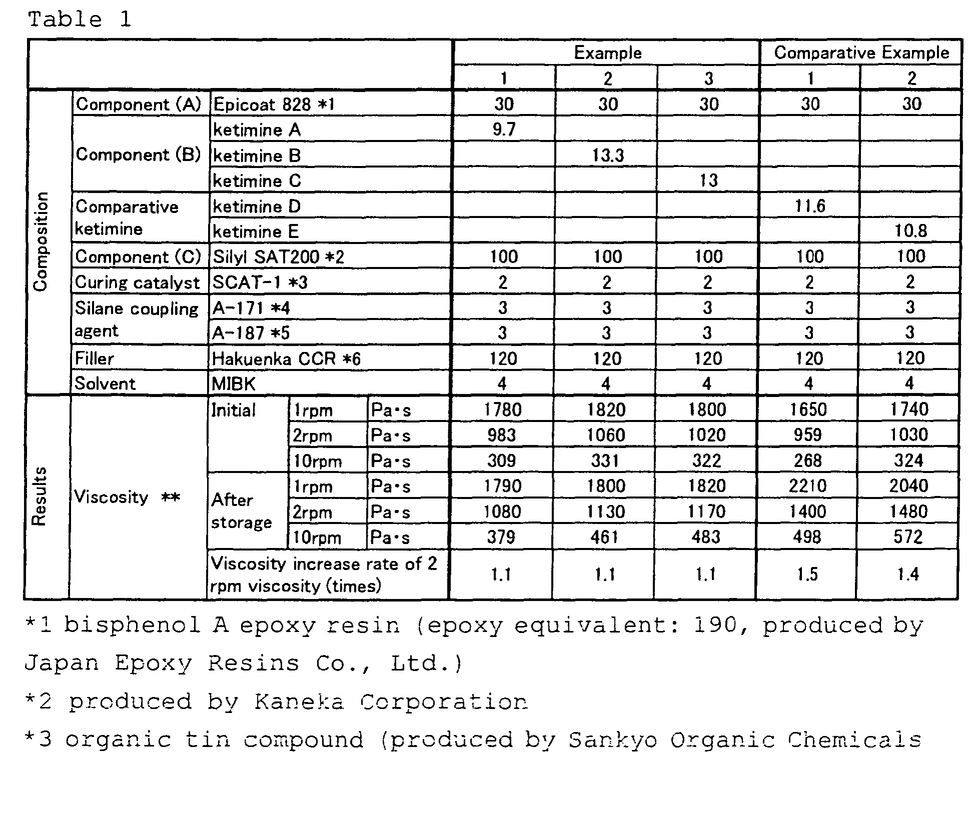

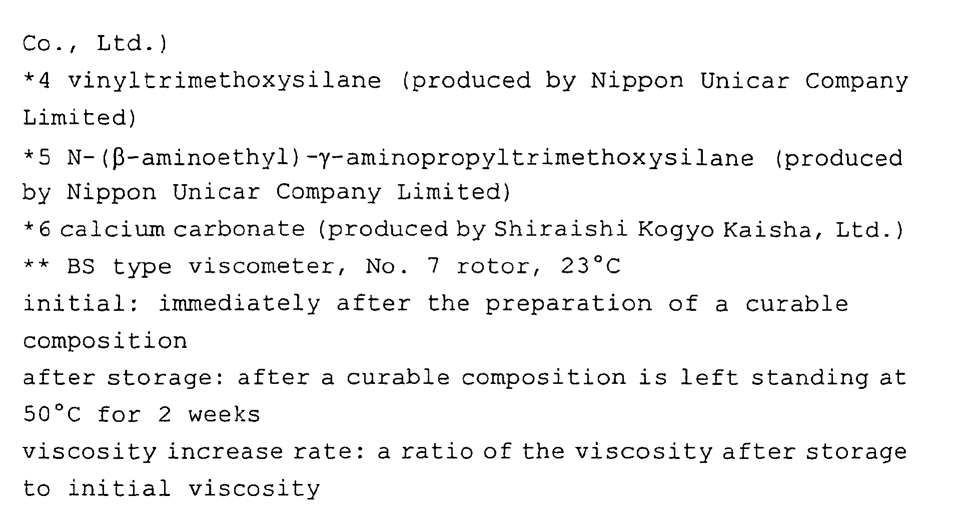

As is apparent from Table 1, in the compositions of the Examples, viscosity hardly changed between before and after the storage. On the other hand, in the compositions of the Comparative Examples, viscosity significantly increased during the storage.

## Claims

1. A curable composition
which comprises:
(A) a polyepoxide having two or more oxirane rings in a molecule or a polyepoxide formed optionally by mixing, into the above-mentioned polyepoxide, monoepoxide having one oxirane ring per a molecule;
(B) a ketimine derived from an amine represented by the following general formula: 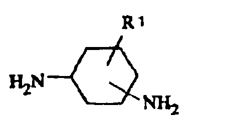 or 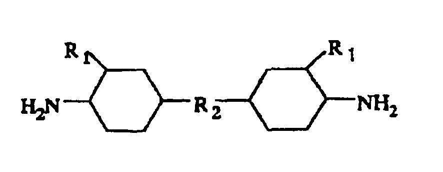 (wherein R₁ represents a hydrogen atom, a methyl group or an ethyl group, and R₂ represents -CH₂-, -O- or -SO₂- group), or 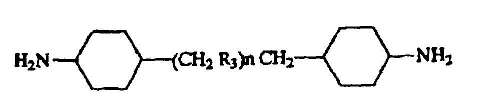 (wherein R₃ represents 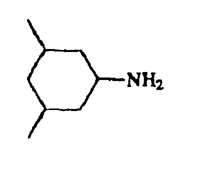 or 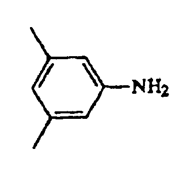 and n represents an integer of 1 to 4) and an aliphatic ketone, as a curing agent; and
(C) an organic polymer containing a reactive silicon group represented by the following general formula (1):
-Si(R¹₃₋ₐ)Xₐ (1)
(wherein R₁ represents a substituted or unsubstituted organic group, X represents a hydroxyl group or a hydrolyzable group and a represents an integer of 1, 2 or 3).

2. The curable composition according to Claim 1
wherein the ketimine as the component (B) is a condensate of an amine selected from 1,2-diaminocyclohexane, 1,3-diaminocyclohexane, 1,4-diaminocyclohexane, 1,2-diamino-4-methylcyclohexane, 1,3-diamino-5-methylcyclohexane, 1,4-diamino-2-methylcyclohexane, 1,2-diamino-4-ethylcyclohexane, 1,3-diamino-5-ethylcyclohexane, 1,4-diamino-2-ethylcyclohexane, bis(4-aminocyclohexyl)methane, bis(3-methyl-4-aminocyclohexyl)methane, bis(3-ethyl-4-aminocyclohexyl)methane, bis(4-aminocyclohexyl)sulfone, bis(3-methyl-4-aminocyclohexyl)sulfone, bis(3-ethyl-4-aminocyclohexyl)sulfone, bis(4-aminocyclohexyl)ether, bis(3-methyl-4-aminocyclohexyl)ether, bis (3-ethyl-4-aminocyclohexyl) ether, and a polyamine obtained by hydrogenating an oligocondensate of aniline and formaldehyde, and an aliphatic ketone.

3. The curable composition according to Claim 1 or 2
wherein the ketimine as the component (B) is a condensate of an aliphatic ketone selected from 2-propanone, 2-butanone, 3-methyl-2-butanone, 3,3-dimethyl-2-butanone, 2-pentanone, 3-pentanone, 2-methyl-3-pentanone, 3-methyl-2-pentanone, 4-methyl-2-pentanone, 4-methyl-3-pentanone, 2,4-dimethyl-3-pentanone, 2-hexanone, 3-hexanone, 5-methyl-2-hexanone, 2-heptanone, 3-heptanone, 4-heptanone, 2-octanone and 3-octanone, and an amine having two or more primary amino groups coupled directly to a cyclohexane ring.

4. The curable composition according to Claim 1 or 3
wherein the ketimine as the component (B) is a condensate of an amine selected from 1,2-diaminocyclohexane, 1,3-diaminocyclohexane, 1,4-diaminocyclohexane, bis(4-aminocyclohexyl)methane, bis(3-methyl-4-aminocyclohexyl)methane, and a polyamine obtained by hydrogenating an oligocondensate of aniline and formaldehyde, and an aliphatic ketone.

5. The curable composition according to Claim 1, 2 or 4
wherein the ketimine as the component (B) is a condensate of an aliphatic ketone selected from 2-butanone, 3,3-dimethyl-2-butanone, 2-pentanone, 3-pentanone, 2-methyl-3-pentanone, 4-methyl-2-pentanone, 2,4-dimethyl-3-pentanone and 5-methyl-2-hexanone, and an amine having two or more primary amino groups coupled directly to a cyclohexane ring.

6. The curable composition according to Claim 1 or 2
wherein the ketimine as the component (B) is a condensate of 4-methyl-2-pentanone and an amine having two or more primary amino groups coupled directly to a cyclohexane ring.

7. The curable composition according to any one of Claims 1 to 6
wherein the polyepoxide as the component (A) is a polyepoxide selected from a glycidyl ether type polyepoxide, a glycidyl ether ester type polyepoxide, a glycidyl ester type polyepoxide, a glycidyl amine type polyepoxide, a glycidyl aminoglycidyl ether type polyepoxide, a glycidyl aminoglycidyl ester type polyepoxide, a polyglycidyl amine type polyepoxide, and an epoxidized polyolefin type polyepoxide.

8. The curable composition according to Claim 7
wherein the glycidyl ether type polyepoxide is any one selected from:
a glycidyl ether obtained by reacting a phenolic compound selected from bisphenol A, bisphenol F, bisphenol S, tetrabromobisphenol A, bisphenol hexafluoroacetone, tetramethylbisphenol A, tetramethylbisphenol F, tetrahydrobisphenol F, hexahydrobisphenol A, hydrogenated bisphenol A and hydrogenated bisphenol F with epichlorohydrin;
a glycidyl ether obtained by reacting a novolac compound selected from phenol novolac, cresol novolac, ethylphenol novolac, propylphenol novolac, butylphenol novolac, pentylphenol novolac, octylphenol novolac and nonylphenol novolac with epichlorohydrin;
a glycidyl ether obtained by reacting a polyhydric phenol selected from catechol, resorcin, trihydroxybiphenyl, dihydroxybenzophenone, bisresorcinol, hydroquinone, tris(hydroxyphenyl)methane, tetrakis(hydroxyphenyl)ethane and bixylenol with epichlorohydrin; and
a polyglycidyl ether obtained by reacting an aliphatic polyhydric alcohol selected from glycerol, neopentyl glycol, ethylene glycol, propylene glycol, tetramethylene glycol, hexylene glycol, polyethylene glycol and polypropylene glycol with epichlorohydrin.

9. The curable composition according to Claim 7
wherein the glycidyl ether type polyepoxide is any one of:
a polyglycidyl ether obtained by reacting a polyhydric hydroxy compound selected from bisphenol A, bisphenol F, phenol novolac, cresol novolac, octylphenol novolac and nonylphenol novolac with epichlorohydrin; or
a polyglycidyl ether obtained by reacting an aliphatic polyhydric alcohol selected from ethylene glycol, propylene glycol, tetramethylene glycol, hexylene glycol, polyethylene glycol and polypropylene glycol with epichlorohydrin.

10. The curable composition according to Claim 7
wherein the glycidyl ether ester type polyepoxide is a glycidyl ether ester obtained by reacting a hydroxycarboxylic acid which is p-oxybenzoic acid or β-oxynaphthoic acid with epichlorohydrin.

11. The curable composition according to Claim 7
wherein the glycidyl ester type polyepoxide is a polyglycidyl ester obtained by reacting a polycarboxylic acid selected from phthalic acid, methylphthalic acid, isophthalic acid, terephthalic acid, tetrahydrophthalic acid, hexahydrophthalic acid, endomethylene tetrahydrophthalic acid, endomethylene hexahydrophthalic acid, trimellitic acid, dimmer acid and polymerized fatty acid with epichlorohydrin.

12. The curable composition according to Claim 7
wherein the glycidyl aminoglycidyl ether type polyepoxide is a glycidyl aminoglycidyl ether obtained by reacting aminophenol or aminoalkylphenol with epichlorohydrin.

13. The curable composition according to Claim 7
wherein the glycidyl aminoglycidyl ester type polyepoxide is a diglycidyl amino ester obtained by reacting aminobenzoic acid with epichlorohydrin.

14. The curable composition according to Claim 7
wherein the polyglycidyl amine type polyepoxide is a polyglycidyl amine obtained by reacting any one amino compound selected from aniline, toluidine, 2,4,6-tribromoaniline, m-xylylenediamine, 1,2-diaminocyclohexane, 1,3-diaminocyclohexane, 1,4-diaminocyclohexane, 4,4-diaminodiphenyl ether, 4,4-diaminodiphenylmethane, 4,4-diaminodiphenylsulfone, hydantoin, alkylhydantoin and cyanuric acid with epichlorohydrin.

15. The curable composition according to Claim 7
wherein the epoxidized polyolefin type polyepoxide is an epoxidized polyolefin obtained by epoxidizing alicyclic polyolefin or aliphatic polyolefin.

16. The curable composition according to any one of Claims 1 to 15
wherein the skeleton of the main chain of the component (C) is a polyoxyalkylene polymer.

17. The curable composition according to Claim 16
wherein the skeleton of the main chain of the component (C) is a polyoxypropylene polymer.

## Patentansprüche

1. Härtbare Zusammensetzung,
welche umfaßt:
(A) ein Polyepoxid mit zwei oder mehr Oxiranringen in einem Molekül oder ein Polyepoxid, das optional gebildet ist durch Mischen in dem oben genannten Polyepoxid von einem Monoepoxid mit einem Oxiranring pro Molekül;
(B) ein Ketimin, abgeleitet aus einem Amin, das dargestellt ist durch die folgende allgemeine Strukturformel: 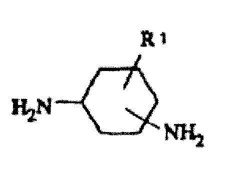 oder 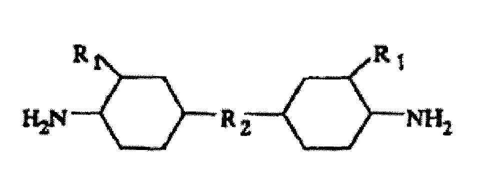 (wobei R₁ ein Wasserstoffatom, eine Methylgruppe oder eine Ethylgruppe darstellt und
R₂ eine -CH₂-, -O- oder -SO₂-Gruppe darstellt), oder 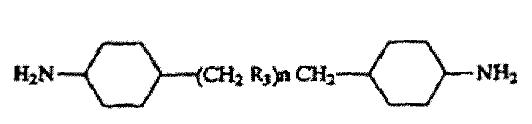 (wobei R₃ darstellt 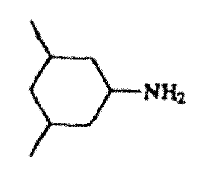 oder 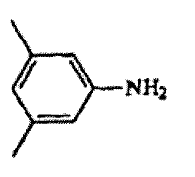 und n eine ganze Zahl von 1 bis 4 darstellt) und ein aliphatisches Keton als Härtungsmittel; und
(C) ein organisches Polymer mit einer reaktiven Siliziumgruppe, dargestellt durch die folgende allgemeine Formel (1):
-Si(R¹₃₋ₐ)Xₐ (1)
(wobei R₁ eine substituierte oder unsubstituierte organische Gruppe darstellt, X eine Hydroxylgruppe oder eine hydrolysierbare Gruppe und a eine ganze Zahl von 1, 2 oder 3 darstellt).

2. Härtbare Zusammensetzung nach Anspruch 1,
wobei das Ketimin als Verbindung (B) ein Kondensat ist von
einem Amin, ausgewählt aus 1,2-Diaminocyclohexan, 1,3-Diaminocyclohexan, 1,4-Diaminocyclohexan, 1,2-Diamino-4-Methylcyclohexan, 1,3-Diamino-5-Methylcyclohexan, 1,4-Diamino-2-Methylcyclohexan, 1,2-Diamino-4-Ethylcyclohexan, 1,3-Diamino-5-Ethylcyclohexan, 1,4-Diamino-2-Ethylcyclohexan, Bis(4-Aminocyclohexyl)-Methan, Bis(3-Methyl-4-Aminocyclohexyl)-Methan, Bis(3-Ethyl-4-Aminocyclohexyl)-Methan, Bis(4-Aminocyclohexyl)-Sulfon, Bis(3-Methyl-4-Aminocyclohexyl)-Sulfon, Bis(3-Ethyl-4-Aminocyclohexyl)-Sulfon, Bis(4-Aminocyclohexyl)-Ether, Bis(3-Methyl-4-Aminocyclohexyl)-Ether, bis (3-Ethyl-4-Aminocyclohexyl)-Ether und
einem Polyamin, erhalten durch Hydrieren eines Oligokondensats von Anilin und Formaldehyd, und
einem aliphatischen Keton.

3. Härtbare Zusammensetzung nach Anspruch 1 oder 2,
wobei das Ketimin als die Verbindung (B) ein Kondensat ist von
einem aliphatischen Keton, ausgewählt aus 2-Propanon, 2-Butanon, 3-Methyl-2-Butanon, 3,3-Dimethyl-2-Butanon, 2-Pentanon, 3-Pentanon, 2-Methyl-3-Pentanon, 3-Methyl-2-Pentanon, 4-Methyl-2-Pentanon, 4-Methyl-3-Pentanon, 2,4-Dimethyl-3-Pentanon, 2-Hexanon, 3-Hexanon, 5-Methyl-2-Hexanon, 2-Heptanon, 3-Heptanon, 4-Heptanon, 2-Octanon und 3-Octanon und
einem Amin mit zwei oder mehr primären Aminogruppen, direkt an einen Cyclohexanring gekoppelt.

4. Härtbare Zusammensetzung nach Anspruch 1 oder 3,
wobei das Ketimin als die Verbindung (B) ein Kondensat ist von
einem Amin, ausgewählt aus 1,2-Diaminocyclohexan, 1,3-Diaminocyclohexan, 1,4-Diaminocyclohexan, Bis(4-Aminocyclohexyl)-Methan, Bis(3-Methyl-4-Aminocyclohexyl)-Methan und
einem Polyamin, erhalten durch Hydrieren eines Oligokondensats von Anilin und Formaldehyd, und
einem aliphatischen Keton.

5. Härtbare Zusammensetzung nach Anspruch 1, 2 oder 4,
wobei das Ketimin als die Verbindung (B) ein Kondensat ist von
einem aliphatischen Keton, gewählt aus 2-Butanon, 3,3-Dimethyl-2-Butanon, 2-Pentanon, 3-Pentanon, 2-Methyl-3-Pentanon, 4-Methyl-2-Pentanon, 2,4-Dimethyl-3-Pentanon und 5-Methyl-2-Hexanon, und
einem Amin mit zwei oder mehr primären Aminogruppen, die direkt an einen Cyclohexanring gekoppelt sind.

6. Härtbare Zusammensetzung nach Anspruch 1 oder 2,
wobei das Ketimin als die Verbindung (B) ein Kondensat von 4-Methyl-2-Pentanon und einem Amin mit zwei oder mehr primären Aminogruppen, die direkt an einen Cyclohexanring gekoppelt sind.

7. Härtbare Zusammensetzung nach einem der Ansprüche 1 bis 6,
wobei das Polyepoxid als die Verbindung (A) ein Polyepoxid ist, gewählt unter einem Polyepoxid vom Glycidylethertyp, einem Polyepoxid vom Glycidyletherestertyp, einem Polyepoxid vom Glycidylestertyp, einem Polyepoxid vom Glycidylamintyp, einem Polyepoxid vom Glycidylaminoglycidylethertyp, einem Polyepoxid vom Glycidylaminoglycidylestertyp, einem Polyepoxid vom Polyglycidylamintyp und einem Polyepoxid vom epoxidierten Polyolefintyp.

8. Härtbare Zusammensetzung nach Anspruch 7,
wobei das Polyepoxid vom Glycidylethertyp eines ist, das gewählt ist aus:
einem Glycidylether, erhalten durch Reagieren einer phenolischen Verbindung, gewählt unter Bisphenol A, Bisphenol F, Bisphenol S, Tetrabrombisphenol A, Bisphenolhexafluoraceton, Tetramethylbisphenol A, Tetramethylbisphenol F, Tetrahydrobisphenol F, Hexahydrobisphenol A, hydriertes Bisphenol A und hydriertes Bisphenol F, mit Epichlorhydrin;
einem Glycidylether, erhalten durch Reagieren einer Novolak-Verbindung, gewählt unter Phenolnovolak, Cresolnovolak, Ethylphenolnovolak, Propylphenolnovolak, Butylphenolnovolak, Pentylphenolnovolak, Octylphenolnovolak und Nonylphenolnovolak, mit Epichlorhydrin;
einem Glycidylether, erhalten durch Reagieren eines mehrbasigen Phenols, gewählt aus Catechol, Resorcin, Trihydroxybiphenyl, Dihydroxybenzophenon, Bisresorcinol, Hydroquinon, Tris(Hydroxyphenyl)-Methan, Tetrakis(Hydroxyphenyl)-Ethan und Bixylenol mit Epichlorhydrin; und
einem Polyglycidylether, erhalten durch Reagieren eines aliphatischen mehrwertigen Alkohols, gewählt unter Glycerin, Neopentylglycol, Ethylenglycol, Propylenglycol, Tetramethylenglycol, Hexylenglycol, Polyethylenglycol und Polyproylenglycol mit Epichlorhydrin.

9. Härtbare Zusammensetzung nach Anspruch 7,
wobei das Polyepoxid vom Glycidylethertyp eines ist aus:
einem Polyglycidylether, erhalten durch Reagieren einer mehrbasigen Hydroxyverbindung, gewählt aus Bisphenol A, Bisphenol F, Phenolnovolak, Cresolnovolak, Octylphenolnovolak und Nonylphenolnovolak, mit Epichlorhydrin; oder
einem Polyglycidylether, erhalten durch Reagieren eines aliphatischen mehrwertigen Alkohols, gewählt aus Ethylenglycol, Propylenglycol, Tetramethylenglycol, Hexylenglycol, Polyethylglycol und Polypropylenglycol mit Epichlorhydrin.

10. Härtbare Zusammensetzung nach Anspruch 7,
wobei das Polyepoxid vom Glycidyletherestertyp ein Glycidyletherester ist, erhalten durch Reagieren einer Hydroxycarboxylsäure, welche p-Oxybenzoesäure oder β-Oxynaphthoesäure ist, mit Epichlorhydrin.

11. Härtbare Zusammensetzung nach Anspruch 7,
wobei das Polyepoxid vom Glycidylestertyp ein Polyglycidylester ist, erhalten durch Reagieren einer Polycarboxylsäure, gewählt aus Phthalsäure, Methylphthalsäure, Isophthalsäure, Terephthalsäure, Tetrahydrophthalsäure, Hexahydrophthalsäure, Endomethylentetrahydrophthalsäure, Endomethylenhexahydrophthalsäure, Trimellitsäure, Dimefettsäure und polymerisierte Fettsäure, mit Epichlorhydrin.

12. Härtbare Zusammensetzung nach Anspruch 7,
wobei das Polyepoxid vom Glycidylaminoglycidylethertyp ein Glycidylaminoglycidylether ist, der erhalten ist durch Reagieren von Aminophenol oder Aminoalkylphenol mit Epichlorhydrin.

13. Härtbare Zusammensetzung nach Anspruch 7,
wobei das Polyepoxid vom Glycidylaminoglycidylestertyp ein Diglycidylaminoester ist, erhalten durch Reagieren von Aminobenzoesäure mit Epichlorhydrin.

14. Härtbare Zusammensetzung nach Anspruch 7,
wobei das Polyepoxid vom Polyglycidylamintyp ein Polyglycidylamin ist, erhalten durch Reagieren einer Aminoverbindung, die gewählt ist aus Anilin, Toluidin, 2,4,6-Tribromanilin, m-Xylylendiamin, 1,2-Diaminocyclohexan, 4,4-Diaminodiphenylether, 4,4-Diaminodiphenylmethan, 4,4-Diaminodiphenylsulfon, Hydantoin, Alkylhydantoin und Blausäure, mit Epichlorhydrin.

15. Härtbare Zusammensetzung nach Anspruch 7,
wobei das Polyepoxid vom epoxidierten Polyolefintyp ein epoxidiertes Polyolefin ist, erhalten durch Epoxidieren von alicyclischem Polyolefin oder aliphatischem Polyolefin.

16. Härtbare Zusammensetzung nach einem der Ansprüche 1 bis 15,
wobei das Grundgerüst der Verbindung (C) ein Polyoxyalkylenpolymer ist.

17. Härtbare Zusammensetzung nach Anspruch 16,
wobei die Grundgerüstkette der Verbindung (C) ein Polyoxypropylenpolymer ist.

## Revendications

1. Composition durcissable
qui comprend :
(A) un poly(époxyde) ayant deux ou plusieurs cycles oxirane dans une molécule ou un poly(époxyde) formé facultativement en mélangeant, dans le poly(époxyde) mentionné ci-dessus, un monoépoxyde ayant un cycle oxirane par molécule ;
(B) une cétimine dérivée d'une amine représentée par la formule générale suivante : 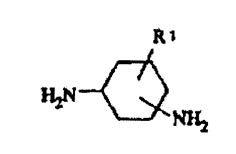 ou 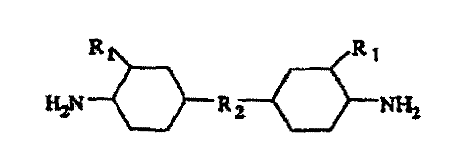 (dans lesquelles R₁ représente un atome d'hydrogène, un groupe méthyle ou un groupe éthyle, et R₂ représente un groupe -CH₂-, -O- ou -SO₂-), ou 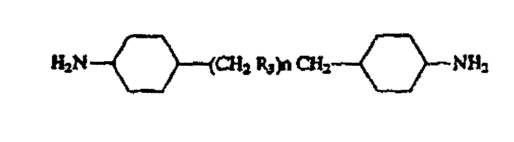 (dans laquelle R₃ représente 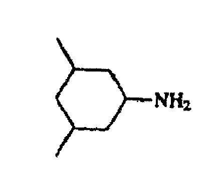 ou 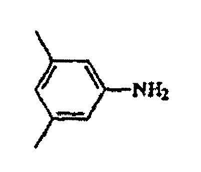 et n représente un nombre entier de 1 à 4) et une cétone aliphatique, en tant qu'agent durcissant ; et
(c) un polymère organique contenant un groupe silicium réactif représenté par la formule générale suivante (1) :
-Si(R¹₃₋ₐ)Xₐ (1)
(dans laquelle R₁ représente un groupe organique substitué ou non substitué, X représente un groupe hydroxyle ou un groupe hydrolysable et a représente un nombre entier égal à 1, 2 ou 3).

2. Composition durcissable, selon la revendication 1
dans laquelle la cétimine en tant que composant (B) est un condensat d'une amine sélectionnée parmi le 1,2-diaminocyclohexane, le 1,3-diaminocyclohexane, le 1,4-diaminocyclohexane, le 1,2-diamino-4-méthylcyclohexane, 1,3-diamino-5-méthylcyclohexane, le 1,4-diamino-2-méthylcyclohexane, 1,2-diamino-4-éthylcyclohexane, le 1,3-diamino-5-éthylcyclohexane, le 1,4-diamino-2-éthylcyclohexane, le bis(4-aminocyclohexyl)méthane, le bis(3-méthyl-4-aminocyclohexyl)méthane, le bis(3-éthyl-4-aminocyclohexyl)méthane, la bis(4-aminocyclohexyl)sulfone, la bis(3-méthyl-4-aminocyclohexyl)sulfone, la bis(3-éthyl-4-aminocyclohexyl)sulfone, le bis(4-aminocyclohexyl)éther, le bis(3-méthyl-4-aminocyclohexyl)éther, le bis(3-éthyl-4-aminocyclohexyl)éther et une poly(amine) obtenue par hydrogénation d'un oligocondensat d'aniline et de formaldéhyde, et une cétone aliphatique.

3. Composition durcissable selon la revendication 1 ou 2,
dans laquelle la cétimine en tant que composition (B) est un condensat d'une cétone aliphatique choisie parmi la 2-propanone, la 2-butanone, la 3-méthyl-2-butanone, la 3,3-diméthyl-2-butanone, la 2-pentanone, la 3-pentanone, la 2-méthyl-3-pentanone, la 3-méthyl-2-pentanone, la 4-méthyl-2-pentanone, la 4-méthyl-3-pentanone, la 2,4-diméthyl-3-pentanone, la 2-hexanone, la 3-hexanone, la 5-méthyl-2-hexanone, la 2-heptanone, la 3-heptanone, la 4-heptanone, la 2-octanone et la 3-octanone, et une amine ayant deux ou plusieurs groupes amino primaires couplés directement à un cycle cyclohexane.

4. Composition durcissable selon la revendication 1 ou 3
dans laquelle la cétimine en tant que composant (B) est un condensat d'une amine choisie parmi le 1,2-diaminocyclohexane, le 1,3-diaminocyclohexane, le 1,4-diaminocyclohexane, le bis(4-aminocyclohexyl)méthane, le bis(3-méthyl-4-aminocyclohexyl)méthane et une poly(amine) obtenue par hydrogénation d'un oligocondensat d'aniline et de formaldéhyde, et une cétone aliphatique.

5. Composition durcissable selon la revendication 1, 2 ou 4
dans laquelle la cétimine en tant que composant (B) est un condensat d'une cétone aliphatique choisie parmi la 2-butanone, la 3,3-diméthyl-2-butanone, la 2-pentanone, la 3-pentanone, la 2-méthyl-3-pentanone, la 4-méthyl-2-pentanone, la 2,4-diméthyl-3-pentanone et la 5-méthyl-2-hexanone, et une amine ayant deux ou plusieurs groupes amino primaires couplés directement à un cycle cyclohexane.

6. Composition durcissable selon la revendication 1 ou 2
dans laquelle la cétimine en tant que composant (B) est un condensat de 4-méthyl-2-pentanone et d'une amine ayant deux ou plusieurs groupes amino primaires couplés directement à un cycle cyclohexane.

7. Composition durcissable selon l'une quelconque des revendications 1 à 6
dans laquelle le poly(époxyde) en tant que composant (A) est un poly(époxyde) choisi parmi un poly(époxyde) de type glycidyl éther, un poly(époxyde) de type ester de glycidyl éther, un poly(époxyde) de type ester de glycidyle, un poly(époxyde) de type glycidylamine, un poly(époxyde) de type glycidyl aminoglycidyl éther, un poly(époxyde) de type ester de glycidyl aminoglycidyle, un poly(époxyde) de type poly(glycidylamine), et un poly(époxyde) de type poly(oléfine) époxydée.

8. Composition durcissable selon la revendication 7
dans laquelle le poly(époxyde) de type glycidyl éther est l'un quelconque parmi :
un glycidyl éther obtenu en faisant réagir un composé phénolique choisi parmi le bisphénol A, le bisphénol F, le bisphénol S, le tétrabromobisphénol A, l'hexafluoroacétone de bisphénol, le tétraméthylbisphénol A, le tétraméthylbisphénol F, le tétrahydrobisphénol F, l'hexahydrobisphénol A, le bisphénol A hydrogéné et le bisphénol F hydrogéné avec de l'épichlorohydrine ;
un glycidyl éther obtenu en faisant réagir un composé résine novolaque choisi parmi une résine novolaque phénolique, une résine novolaque de crésol, une résine novolaque d'éthylphénol, une résine novolaque de propylphénol, une résine novolaque de butylphénol, une résine novolaque de pentylphénol, une résine novolaque d'octylphénol et une résine novolaque de nonylphénol avec de l'épichlorohydrine ;
un glycidyl éther obtenu en faisant réagir une résine de phénol polyhydrique choisie parmi le catéchol, la résorcine, le trihydroxybiphényle, la dihydroxybenzophénone, le bisrésorcinol, l'hydroquinone, le tris(hydroxyphényl)méthane, le tétrakis(hydroxyphényl)éthane et le bixylénol avec de l'épichlorohydrine ; et
un poly(glycidyl éther) obtenu en faisant réagir un alcool polyhydrique aliphatique choisi parmi le glycérol, le néopentyl glycol, l'éthylène glycol, le propylène glycol, le tétraméthylène glycol, l'hexylène glycol, le poly(éthylène glycol) et le poly(propylène glycol) avec de l'épichlorohydrine.

9. Composition durcissable selon la revendication 7
dans laquelle le poly(époxyde) de type glycidyl éther est l'un quelconque parmi :
un poly(glycidyl éther) obtenu en faisant réagir un composé hydroxy polyhydrique choisi parmi le bisphénol A, le bisphénol F, une résine novolaque phénolique, une résine novolaque de crésol, une résine novolaque d'octylphénol et une résine novolaque de nonylphénol avec de l'épichlorohydrine ; ou
un poly(glycidyl éther) obtenu en faisant réagir un alcool polyhydrique aliphatique choisi parmi l'éthylène glycol, le propylène glycol, le tétraméthylène glycol, l'hexylène glycol, le poly(éthylène glycol) et le poly(propylène glycol) avec de l'épichlorohydrine.

10. Composition durcissable selon la revendication 7
dans laquelle le poly(époxyde) de type ester de glycidyl éther est un ester de glycidyl éther obtenu en faisant réagir un acide hydroxycarboxylique qui est un acide p-oxybenzoïque ou un acide β-oxynaphtoïque avec de l'épichlorohydrine.

11. Composition durcissable selon la revendication 7
dans laquelle le poly(époxyde) de type ester de glycidyle est un poly(ester) de glycidyle obtenu en faisant réagir un poly(acide carboxylique) choisi parmi l'acide phtalique, l'acide méthylphtalique, l'acide isophtalique, l'acide téréphtalique, l'acide tétrahydrophtalique, l'acide hexahydrophtalique, l'acide tétrahydrophtalique d'endométhylène, l'acide hexahydrophtalique d'endométhylène, l'acide trimellitique, un acide dimère et un acide gras polymérisé avec de l'épichlorohydrine.

12. Composition durcissable selon la revendication 7
dans laquelle le poly(époxyde) de type glycidyl aminoglycidyl éther est un glycidyl aminoglycidyl éther obtenu en faisant réagir de l'aminophénol ou de l'aminoalkylphénol avec de l'épichlorohydrine.

13. Composition durcissable selon la revendication 7
dans laquelle le poly(époxyde) de type ester de glycidyl aminoglycidyle est un amino ester de diglycidyle obtenu en faisant réagir un acide aminobenzoïque avec de l'épichlorohydrine.

14. Composition durcissable selon la revendication 7
dans laquelle le poly(époxyde) de type poly(glycidylamine) est une poly(glycidylamine) obtenue en faisant réagir un composé amino choisi parmi l'aniline, la toluidine, la 2,4,6-tribromoaniline, la m-xylylènediamine, le 1,2-diaminocyclohexane, le 1,3-diaminocyclohexane, le 1,4-diaminocyclohexane, le 4,4-diaminodiphényl éther, le 4,4-diaminodiphénylméthane, la 4,4-diaminodiphénylsulfone, l'hydantoïne, l'alkylhydantoïne et l'acide cyanurique avec de l'épichlorohydrine.

15. Composition durcissable selon la revendication 7
dans laquelle le poly(époxyde) de type poly(oléfine) époxydée est une poly(oléfine) époxydée obtenue en époxydant une poly(oléfine) alicyclique ou une poly(oléfine) aliphatique.

16. Composition durcissable selon l'une quelconque des revendications 1 à 15
dans laquelle le squelette de la chaîne principale du composant (C) est un polymère de poly(oxyalkylène).

17. Composition durcissable selon la revendication 16
dans laquelle le squelette de la chaîne principale du composant (c) est un polymère de poly(oxypropylène).
